# EUROPÄISCHE PATENTSCHRIFT

(11) **EP 3 032 181 B1**
(45) Veröffentlichungstag und Bekanntmachung des Hinweises auf die Patenterteilung: **31.01.2018**
(21) Anmeldenummer: 15198630.4
(22) Anmeldetag: 09.12.2015
(51) Int. Cl.: F24D 17/00, F24D 17/02, F24D 19/10, G05D 23/00

(54) **HEIZSYSTEM MIT WARMWASSERBEREITSTELLUNG**
HEATING SYSTEM WITH HOT WATER PREPARATION
SYSTEME DE CHAUFFAGE COMPRENANT UN CHAUFFE-EAU

(30) Priorität: 12.12.2014 DE 102014225693
(43) Veröffentlichungstag der Anmeldung: 15.06.2016
(73) Patentinhaber: Vaillant GmbH, 42859 Remscheid (DE)
(72) Erfinder: Menne, Peter, 42897 Remscheid (DE)
(74) Vertreter: Popp, Carsten

(56) Entgegenhaltungen:
- EP-A1- 2 407 729
- WO-A1-2014/087700
- KR-A- 20130 060 155

## Beschreibung

Die Erfindung betrifft ein Heizsystem mit Warmwasserbereitstellung. Für die Trinkwassererwärmung werden üblicherweise entweder Speicherbehältersysteme oder Durchlaufheizersysteme eingesetzt. Bei den Speicherbehältersystemen werden üblicherweise Trinkwasser-Rohrwendelspeicher und Schichtenspeicher verwendet, die indirekt mittels erwärmtem Heizwasser beheizt werden.

Als Durchlaufheizersysteme werden gasbeheizte Durchlauferhitzer und Elektro-Durchlauferhitzer angeboten. Zudem zählen hierzu auch die indirekten Wassererwärmer, wie gasbeheizte Kombi-Heizgeräte, als auch Systeme mit Heizwasser-Pufferspeicher - in diesen Fällen wird die Wärme über einen zusätzlichen Wärmetauscher im Durchlaufprinzip von erwärmtem Heizwasser auf das Trinkwasser übertragen.

Bei Trinkwasserspeichern, die mit Solarwärme beheizt werden, ist es weiterhin bekannt, einen Elektro-Durchlauferhitzer strömungsseitig hinter den Trinkwasserspeicher anzuordnen, der bei zu geringer Trinkwassertemperatur im Speicher das Trinkwasser soweit nacherwärmen kann, dass die gewünschte Warmwasser-Auslauftemperatur erreicht wird.

Im Neubau werden aufgrund des hohen Wärmedämmstandards für Wohnhäuser nur noch vergleichsweise geringe Heizleistungen benötigt. Hinsichtlich des Warmwasserkomforts dagegen besteht ein steigender Leistungsbedarf, resultierend aus heute üblichen Komfort-Badewannen und Duschsystemen mit hohem Wasserverbrauch. Wird eine Wärmepumpe als Wärmeerzeuger verwendet, die im Wesentlichen den Heizwärmebedarf decken soll, reicht die Leistung oft nur für eine eingeschränkte Warmwasserbereitung. Es ist zwar möglich, mit einem hinreichend großen Wärmespeicher die benötigte Menge an Warmwasser über einen längeren Zeitraum zu erwärmen und vorzuhalten. Insbesondere bei Kompaktwärmepumpen, die auf engem Raum Wärmepumpe und Trinkwasserspeicher sowie die erforderliche Hydraulik vereinen, ist jedoch nur ein begrenztes Trinkwasservolumen realisierbar, womit die Warmwasserbereitung weiter eingeschränkt ist. Zudem können mit einer Wärmepumpe nur unter Inkaufnahme einer schlechten Leistungszahl hohe Warmwassertemperaturen erreicht werden, während z.B. Gebäude mit Fußbodenheizung mit einer Vorlauftemperatur von 30 bis 40 °C beheizt werden können.

Die eingangs genannte aus der solaren Wärmegewinnung bekannte Lösung, bei einem Warmwasserspeicher stömungsseitig in Reihe hinter dem Speicher einen Durchlauferhitzer anzuordnen hat den Nachteil, dass ein Elektro-Durchlauferhitzer einen hohen strömungsseitigen Druckverlust aufweist und so nur ein vergleichsweise geringer Warmwassermassenstrom ermöglicht wird. Sind Speicher und Durchlauferhitzer hintereinander geschaltet, begrenzt dies auch die Warmwassermenge, die durch den Warmwasserspeicher fließt.

Die Patentanmeldung EP 2 407 729 A1 offenbart ein Warmwassersystem mit einer Wärmepumpe, einem durch die Wärmepumpe beheizten Warmwasserspeicher und einem zusätzlichen Warmwassergerät. Über eine Zapfstelle kann Warmwasser aus dem Warmwasserspeicher entnommen werden. Dabei wird das Warmwasser entweder über das zusätzliche Warmwassergerät geleitet und dort nach erhitzt. Optional kann ein Bypassventil geöffnet werden, so dass das Warmwasser direkt aus dem Speicher zur Zahlstelle strömt. Dabei wird mittels eines Steuergeräts die Beheizung des zusätzlichen Warmwassergeräts unterbrochen.

Ein entsprechendes System offenbart die Patentanmeldung KR 10-2013-0060155 A. Hier wird vorgeschlagen, dass das Bypassventil auch kontinuierlich öffnet.

Es ist daher Aufgabe der Erfindung, ein Heizsystem zum Beheizen eines Gebäudes und zum Erwärmen von Warmwasser bereitzustellen, das die genannten Nachteile nicht aufweist. Diese Aufgabe wird gemäß den Merkmalen des Anspruchs 1 dadurch gelöst, dass zusätzlich zu dem in dem von einer Hauptwärmequelle beheizten Wärmespeicher gespeicherten Warmwasser bzw. gespeicherten Wärmeträgermedium zur Warmwasserbereitung parallel eine Zusatzwärmequelle vorgesehen ist, die bei Bedarf Warmwasser mit hoher Temperatur bereitstellen kann. Die beiden Warmwasser-Ströme werden dann in einem Knotenpunkt zusammengeführt und einer Zapfstelle zugeführt. Ein wesentlicher Vorteil ergibt sich beim Erfindungsgemäßen Heizsystem dadurch, dass die Wärmeenergie der Zusatzwärmequelle jederzeit unabhängig von der Beladung des Wärmespeichers in voller Höhe eingespeist werden kann. Wird die Zusatzwärmequelle strömungsseitig wie im Stand der Technik in Reihe mit dem Wärmespeicher geschaltet, ist dies nicht möglich. Ist der Speicher beispielsweise auf 60 °C aufgeheizt, kann die Zusatzwärmequelle nur noch wenig Wärme beisteuern, was insbesondere bei einem Wärmespeicher, welcher als Schichtenspeicher mit guter Wärmeschichtung ausgeführt ist, zu dem Effekt führt, dass zuerst nur die Wärmeenergie des Speichers genutzt wird, und anschließend nur die Wärmeenergie der Zusatzwärmequelle. Dabei wird erfindungsgemäß das Frischwasser, bevor es im Durchlauferhitzer erwärmt wird, durch einen Wärmetauscher geleitet, der von der Hauptwärmequelle beheizt wird. Dies hat den Vorteil, dass bei sehr hohen Warmwasserbedarf das Warmwasser durch drei Wärmequellen bereitgestellt wird. Dies sind der Wärmespeicher, die Hauptwärmequelle und die Zusatzwärmequelle. Bevorzugt werden die beiden Warmwasserströme jeweils durch Ventile hinsichtlich ihres Massenstroms eingestellt.

Der Wärmespeicher kann ein Trinkwasserspeicher sein, der entweder konventionell aufgebaut ist und über einen integrierten Wärmetauscher durch die Hauptwärmequelle erwärmt wird oder als Schichtenspeicher ausgeführt ist. Ebenfalls kann der Wärmespeicher ein Wärmeträgermedium enthalten, dass über einen Wärmetauscher seine Wärme an das Warmwasser abgibt.

Die Wärmequelle ist bevorzugt eine Wärmepumpe, die Zusatzwärmequelle bevorzugt ein elektrischer Durchlauferhitzer.

Durch ein Steuersystem kann sichergestellt werden, dass die Warmwasserströme aus dem Wärmespeicher und aus der Zusatzwärmequelle im richtigen Verhältnis zu der gewünschten Solltemperatur gemischt werden. Diese kann entweder im Steuergerät selbst gespeichert sein oder individuell vom Benutzer angefordert werden. So sind beispielsweise zum Duschen andere Temperaturen gewünscht als zum Geschirr spülen.

Bei einem Verfahren zum Betreiben des erfindungsgemäßen Heizsystems wird das Warmwasser mit oberer Priorität über den Wärmespeicher bezogen. Erst wenn die Temperatur des Warmwassers nicht ausreicht, um die gewünschte Solltemperatur zu erreichen, wird Warmwasser über die Zusatzwärmequelle zugemischt.

In einer Weiterbildung des Verfahrens wird die Zusatzwärmequelle auch dann schon betrieben, wenn der Wärmespeicher zwar die Solltemperatur aufweist, jedoch nahezu erschöpft ist. Dies ist bei einem Schichtenspeicher der Fall, wenn die Solltemperatur nur noch in der obersten Schicht vorliegt. Bei einem konventionellen Speicher ist dies der Fall, wenn die Temperatur nur knapp oberhalb der Solltemperatur liegt oder bei einem Phasenwechselmaterial, wenn dieses überwiegend erstarrt ist.

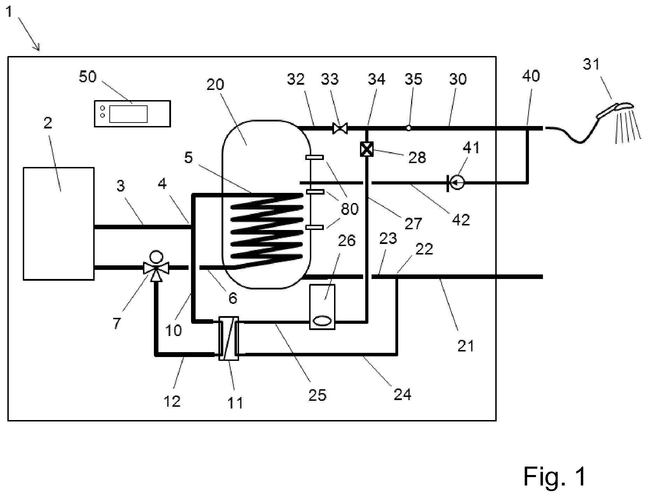

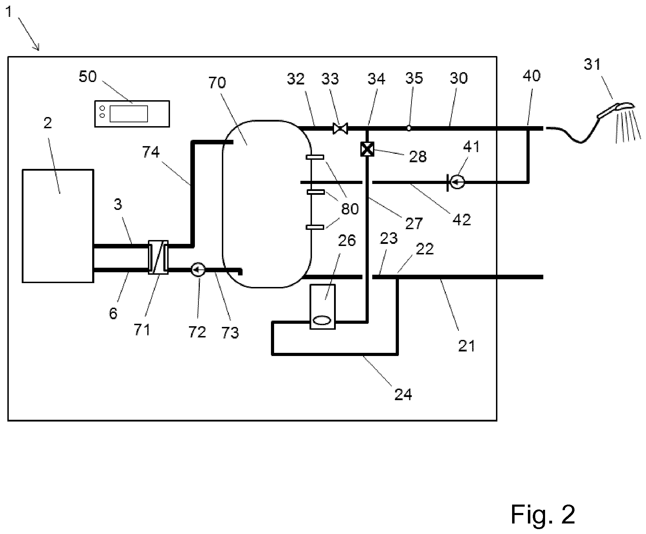

Die Erfindung wird nun anhand der Figuren detailliert erläutert. Es stellen dar:
Figur 1: ein erfindungsgemäßes Heizsystem
Figur 2: eine alternative Ausführungsform des erfindungsgemäßen Heizsystems.
Die nachfolgende Beschreibung richtet sich auf beide Figuren. Auf die Unterschiede der Ausführungsformen wird gesondert hingewiesen. Figur 1 zeigt als Wärmespeicher 20 einen Trinkwasserspeicher, der über eine Rohrwendel 5 beheizt wird. Figur 2 hingegen zeigt einen Schichtenspeicher 70. Zudem ist in Figur 1 der Zusatzwärmequelle 26 ein Wärmetauscher 11 vorgeschaltet. Die Merkmale der Figuren 1 und 2 sind kombinierbar. Zudem kann der Wärmespeicher 20, 70 auch mit einem Wärmeträgermedium, z.B. Wasser oder ein Phasenwechselmaterial, befüllt sein, das die Wärme über einen hier nicht dargestellten Wärmetauscher an das Trinkwasser überträgt. In diesem Fall ist der hier nicht dargestellte Wärmetauscher als Bestandteil des Wärmespeichers 20, 70 zu betrachten.

Das erfindungsgemäße Heizsystem 1 umfasst eine Hauptwärmequelle 2, zum Beispiel eine kompakte Wärmepumpe. Erfindungsgemäß ist eine Zusatzwärmequelle 26, zum Beispiel ein Elektro-Durchlauferhitzer, parallel zu einem Wärmespeicher 20 geschaltet. Die Zusatzwärmequelle 26 kann auch ein reduzierter Modulblock eines Durchlauferhitzers sein, der im Wesentlichen nur aus der Elektroheizpatrone, einem Durchflussmesser und einem Sicherheitstemperaturbegrenzer besteht. Wird an einer Zapfstelle 31 Warmwasser entnommen, fließt das Frischwasser über die Frischwasserzuleitung 21 in den Wärmespeicher 20 in Figur 1 und schiebt erwärmtes Trinkwasser oben aus dem Wärmespeicher 20 in die Warmwasserleitung 30 zur Zapfstelle 31.

Liegt ein erhöhter Bedarf an Warmwasser bezüglich des Massenstroms oder der Temperatur vor, kann der Nutzer dies über das Steuergerät 50 an die Gerätesteuerung melden. Das Steuergerät 50 öffnet dann das zweite Ventil 28 und gibt die Zusatzwärmequelle 26 zum Betrieb frei. Das Frischwasser fließt dann über die Frischwasserzuleitung 21 zum Wärmespeicher 20 und parallel über die Abzweigstelle 22 in die Zuleitung 24 zur Zusatzwärmequelle 26, in der das Frischwasser bis auf eine Wunschtemperatur erwärmt wird, und anschließend durch die zweite Ablaufleitung 27 und das geöffnete zweite Ventil 28 zum Knotenpunkt 34 der Warmwasserleitung 30. Am Knotenpunkt 34 mischt sich das Wasser der Zusatzwärmequelle 26 mit dem Wasser des Wärmespeichers 20, sodass sich an der Zapfstelle 31 eine höhere Warmwassermenge mit dem gewünschten Massenstrom und der gewünschten Temperatur ergibt. Die Warmwasser-Temperatur kann auch im Steuergerät 50 gespeichert sein und wird mit dem tatsächlichen Temperatur-Niveau des Wärmespeichers 20 verglichen. Reicht die Temperatur nicht aus, wird die Zusatzwärmequelle 26 zugeschaltet.

Aufgrund des hohen strömungsseitigen Druckverlustes der Zusatzwärmequelle 26 müssen die teildurchströmten Kreise, einmal über die Zusatzwärmequelle 26, zum anderen über den Wärmespeicher 20, aufeinander abgestimmt werden. Hierzu kann in den Teilstrang des Speichers, entweder in die Zuleitung 23 oder die erste Ablaufleitung 32, beispielsweise ein erstes Ventil 33 angeordnet werden. Im einfachsten Fall kann das erste Ventil 33 eine Festdrossel sein. Das erste Ventil 33 kann beispielsweise hierbei so abgestimmt werden, dass etwa 2/3 der Wassermenge über den Wärmespeicher 20 fließen, und 1/3 über die Zusatzwärmequelle 26. Werden die teildurchströmten Kreise nicht aufeinander abgestimmt, ergibt sich am Knotenpunkt 34 ein zu starkes Druckgefälle in der zweiten Ablaufleitung 27, sodass über die zweite Ablaufleitung 27 kein Wasser in die Warmwasserleitung 30 fließen kann und es zu einer Funktionsstörung der Zusatzwärmequelle 26 kommen kann. Die Abstimmung der Ventile untereinander kann erfindungsgemäß auch adaptiv erfolgen, um die gewünschte Temperatur bei dem aktuellen Massenstrom zu erreichen.

Die Zusatzwärmequelle 26 kann entweder direkt, wie in Figur 2 dargestellt, oder über einen Wärmetauscher 11, wie in Figur 1 dargestellt, mit der Frischwasserzuleitung 21 verbunden sein. In der zweiten Alternative liefert die Hauptwärmequelle 2, die im Betrieb erwärmtes Heizwasser über die Vorlaufleitung 3 zur Rohrwendel 5 des Wärmespeichers 20 liefert, dieses alternativ zum Wärmetauscher 11. Hierzu kann mittels eines Umschaltventils 7 das Heizwasser anstatt zu der Rohrwendel 5 zu dem Wärmetauscher 11 geleitet werden, sodass die Wärmeenergie der Hauptwärmequelle 2 bedarfsweise statt zur Erwärmung des Wassers im Wärmespeicher 20 zur Vorerwärmung des Trinkwassers, das zur Zusatzwärmequelle 26 fließt, genutzt werden kann. Hierzu wird ein Umschaltventil 7 entweder in den Vorlauf 3 oder den Rücklauf 6 der Wärmepumpe eingebaut. Das Heizwasser fließt beispielsweise über die Vorlaufleitung 3 zu der Abzweigstelle 4, von da über die Zuleitung 10 zum Wärmetauscher 11, und über die dritte Ablaufleitung 12 zum Umschaltventil 7 und dann in die Rücklaufleitung 6 zur Hauptwärmequelle 2 zurück. Im Wärmetauscher 11 wird die Wärme vom Heizwasser auf das Trinkwasser übertragen, das als Frischwasser von der Frischwasserzuleitung 21 über die Abzweigstelle 22 und die Zuleitung 24 zum Wärmetauscher 11 eintritt und als vorgewärmtes Trinkwasser aus der Leitung 25 zur Zusatzwärmequelle 26 fließt. Die Leistungen der Hauptwärmequelle 2 und die Zusatzwärmequelle 26 werden so koordiniert, dass die gewünschte Temperatur bei dem vorliegenden Massenstrom erreicht wird. Dabei wird die Energieeffizienz der Wärmequellen 2, 26 berücksichtigt. Im Falle einer Kombination einer Wärmepumpe mit einem elektrischen Durchlauferhitzer kann die Wärmepumpe eine maximale Leistung beisteuern, bis zu der eine Leistungszahl deutlich größer 1 erreicht wird. Die restliche Leistung kann durch den Durchlauferhitzer erbracht werden.

Das zweite Ventil 28 wird nur dann geöffnet, wenn die Zusatzwärmequelle 26 zur Warmwasserbereitung genutzt wird, beispielsweise wenn der Nutzer einen erhöhten Warmwasserbedarf an das Steuergerät 50 meldet. Ein erhöhter Warmwasserbedarf kann beispielsweise auch durch eine geeignete Anordnung und Auswertung von mehreren Speicher-Temperaturfühlern 80 ermittelt werden. Also auch bei Betreib einer Zirkulationspumpe 41 bleibt das zweite Ventil 28 geschlossen, solange keine Warmwasserzapfung mit Betrieb der Zusatzwärmequelle 26 vorliegt.

Wahlweise kann die Steuerung der Zusatzwärmequelle 26 nicht nur über eine Solltemperaturvorgabe der Auslauftemperatur am Durchlauferhitzer erfolgen, sondern auch über einen weiteren Temperaturfühler 35, die sich in der Warmwasserleitung 30 hinter dem Knotenpunkt 34 befindet, um so einen besseren Einfluss auf die tatsächliche Zapftemperatur an der Zapfstelle 31 zu haben.

Statt des Wärmespeichers 20 in Form eines Wasserspeichers 20 mit einer Rohrwendel 5 kann dieser auch als Schichtenspeicher 70 mit einem externen Plattenwärmetauscher 71 und einer Schichtladepumpe 72 ausgeführt sein. In diesem Fall ist der Wärmetauscher 11 und das Umschaltventil 7 nicht unbedingt erforderlich, da die Hauptwärmequelle auch bei einer Warmwasserzapfung weiterhin Wärme in den Wärmespeicher 70 einschichten kann.

Die Hauptwärmequelle 2 liefert in diesem Fall erwärmtes Heizwasser über die Vorlaufleitung 3 zum Plattenwärmetauscher 71, und von da über die Rücklaufleitung 6 zurück zur Hauptwärmequelle 2. Von der Speicherladepumpe 72 wird das kalte Wasser aus dem unteren Bereich des Wärmespeichers 70 über die Zuleitung 73 zum Plattenwärmetauscher 71 transportiert, dort vom Heizwasser erwärmt und über die Ablaufleitung 74 in den oberen Bereich des Wärmespeichers 70 im Speicher eingeschichtet.

Wird als Hauptwärmequelle 2 eine Wärmepumpe zur Beheizung des Wärmespeichers 20 verwendet, kann es von Vorteil sein, wenn die Hauptwärmequelle 2 während einer Warmwasserzapfung nicht weiter den Wärmespeicher 20 lädt, sondern für die Vorwärmung des Trinkwassers genutzt wird. Dies kann mit Hilfe eines Vorrangumschaltventils 7 mittels eines Wärmetauschers 11 in der oben beschriebenen Weise erfolgen. Da eine Wärmepumpe oft nur auf eine geringe Wärmeleistung ausgelegt ist, ist der Beitrag der Hauptwärmequelle 2 zur Erwärmung des Wassers im Wärmespeicher 20 während einer Warmwasserzapfung vergleichsweise gering und praktisch nicht nutzbar. Hingegen kann die Hauptwärmequelle 2 während einer Warmwasserzapfung sehr gut zur Vorwärmung des Trinkwassers genutzt werden, wenn ohnehin die Zusatzwärmequelle 26 mit zur Warmwasserbereitung beiträgt.

Wird die Zusatzwärmequelle 26 bei einer Warmwasserzapfung nicht genutzt, weil beispielsweise der Nutzer keinen erhöhten Warmwasserbedarf gemeldet hat, bleibt das zweite Ventil 28 geschlossen, und das Umschaltventil 7 bleibt so geschaltet, dass die Hauptwärmequelle 2 den Wärmespeicher 20 beheizt.

### Bezugszeichenliste

- 1: Heizsystem
- 2: Hauptwärmequelle
- 3: Vorlaufleitung
- 4: Abzweigstelle
- 5: Rohrwendel
- 6: Rücklaufleitung
- 7: Umschaltventil
- 10: Zuleitung
- 11: Wärmetauscher
- 12: Dritte Ablaufleitung
- 20: Wärmespeicher
- 21: Frischwasserzuleitung
- 22: Abzweigstelle
- 23, 24: Zuleitung
- 25: Leitung
- 26: Zusatzwärmequelle
- 27: Zweite Ablaufleitung
- 28: Zweites Ventil
- 30: Warmwasserleitung
- 31: Zapfstelle
- 32: Erste Ablaufleitung
- 33: Erstes Ventil
- 34: Knotenpunkt
- 35: Temperaturfühler
- 40: Abzweigstelle
- 41: Zirkulationspumpe
- 42: Zirkulationsleitung
- 50: Steuergerät
- 70: Wärmespeicher
- 71: Plattenwärmetauscher
- 72: Schichtladepumpe
- 73: Zuleitung
- 74: Ablaufleitung
- 80: Temperaturfühler

## Patentansprüche

1. Heizsystem (1) zum Beheizen eines Gebäudes und zum Erwärmen von Warmwasser, welches an einer Zapfstelle (31) bereitgestellt wird, umfassend eine Frischwasserzuleitung (21) zum Zuleiten von kaltem Wasser, eine Hauptwärmequelle (2), einen mit der Hauptwärmequelle (2) verbundenen Wärmespeicher (20) und eine Zusatzwärmequelle (26), wobei die Hauptwärmequelle (2) zum Beheizen des Gebäudes und/oder zum Erwärmen des Wärmespeichers (20) vorgesehen ist, wobei der Wärmespeicher (20) Warmwasser oder aber ein erwärmtes Wärmeträgermedium zur Erwärmung des Warmwassers speichert und wobei die Zusatzwärmequelle (26) zum Erwärmen des Warmwassers vorgesehen ist, wobei das Warmwasser vom Wärmespeicher (20) kommend über eine erste Ablaufleitung (32) geführt wird, wobei das Warmwasser von der Zusatzwärmequelle (26) über eine zweite Ablaufleitung (27) mit einem zweiten Ventil (28) geführt wird, wobei die erste Ablaufleitung (32) und die zweite Ablaufleitung (27) an einem Knotenpunkt (34) zusammengeführt werden, von wo aus eine Warmwasserleitung (30) das Warmwasser zur Zapfstelle (31) führt, **dadurch gekennzeichnet, dass** das Heizsystem (1) einen Wärmetauscher (11) umfasst, dass mit einem Umschaltventil (7) die Hauptwärmequelle (2) entweder mit dem Wärmespeicher (20) oder mit der ersten Seite des Wärmetauschers (11) verbunden werden kann, und dass die Zusatzwärmequelle (26) über die zweite Seite des Wärmetauschers so mit der Frischwasserzuleitung (21) verbunden ist, dass im Betrieb das kalte Frischwasser zunächst durch den Wärmetauscher (11) strömt und danach durch die Zusatzwärmequelle (26) strömt.

2. Heizsystem (1) nach Anspruch 1, **dadurch gekennzeichnet, dass** die erste Ablaufleitung (32) ein erstes Ventil (33) zum Drosseln oder Absperren und/oder dass die zweite Ablaufleitung (27) ein zweites Ventil (28) zum Drosseln oder Absperren umfasst.

3. Heizsystem (1) nach Anspruch 1 oder 2, **dadurch gekennzeichnet, dass** der Wärmespeicher (20) ein Trinkwasserspeicher ist.

4. Heizsystem (1) nach Anspruch 1 oder 2, **dadurch gekennzeichnet, dass** der Wärmespeicher (20) ein Speicher mit einem Wärmeträgermedium ist, und dass der Wärmespeicher (20) einen Wärmetauscher zur Übertragung der Wärme des Wärmeträgermediums auf Frischwasser umfasst.

5. Heizsystem (1) nach einem der vorhergehenden Ansprüche, **dadurch gekennzeichnet, dass** die Hauptwärmequelle (2) eine Wärmepumpe ist.

6. Heizsystem (1) nach einem der vorhergehenden Ansprüche, **dadurch gekennzeichnet, dass** die Zusatzwärmequelle (26) ein Durchlauferhitzer ist.

7. Heizsystem (1) nach einem der vorhergehenden Ansprüche, **dadurch gekennzeichnet, dass** das Heizsystem (1) ein Steuergerät (50) umfasst, das mit einem oder mehreren Temperaturfühlern (80) zum Erfassen der vom Wärmespeicher (20) bereitgestellten Wärme verbunden ist, das mit Stellmitteln zum Betätigen der Ventile (28, 33) und gegebenenfalls mit einem Stellmittel für das Umschaltventil (7) verbunden ist und dass das Steuergerät (50) so konfiguriert ist, dass im Betrieb die Ventile (28, 33) und gegebenenfalls das Umschaltventil (7) so betätigt werden, dass die Temperatur an der Zapfstelle (31) einem gespeicherten oder vom Bediener eingegebenen Temperatur-Sollwertes entspricht.

8. Verfahren zum Betreiben eines Heizgerätes nach einem der Ansprüche 1 bis 7, **dadurch gekennzeichnet, dass** beim Zapfen von Warmwasser an der Zapfstelle (31) die Ventile (28, 33) und gegebenenfalls das Umschaltventil (7) so betätigt werden, dass zunächst das Warmwasser vom Wärmespeicher (20) bereitgestellt wird und in dem Fall, dass die Temperatur des vom Wärmespeicher (20) bereitgestellten Warmwassers unterhalb des gespeicherten oder vom Bediener eingegebenen Temperatur-Sollwertes ist, das Warmwasser zusätzlich oder ausschließlich von der Zusatzwärmequelle (26) bereitgestellt wird.

9. Verfahren nach Anspruch 8, **dadurch gekennzeichnet, dass** das Warmwasser auch dann schon zusätzlich von der Zusatzwärmequelle (26) bereitgestellt wird, wenn die Temperatur des vom Wärmespeicher (20) bereitgestellten Warmwassers oberhalb oder gleich des gespeicherten oder vom Bediener eingegebenen Temperatur-Sollwertes ist, jedoch bei einem Schichtenspeicher die Solltemperatur nur noch in der obersten Schicht vorliegt, bei einem konventionellen Speicher die Temperatur nur knapp oberhalb der Solltemperatur liegt oder bei einem Phasenwechselmaterial dieses überwiegend erstarrt ist und daher die im Speicher enthaltene Energiemenge nicht ausreicht, um eine ausreichendes Warmwasser- Volumen mit der Solltemperatur bereitzustellen.

## Claims

1. Heating system (1) for heating a building and for heating hot water provided at a tapping point (31), comprising a fresh water supply line (21) for supplying cold water, a main heat source (2), a heat accumulator (20) connected to the main heat source (2), and a supplementary heat source (26), wherein the main heat source (2) is provided for heating the building and/or for heating the heat accumulator (20), wherein the heat accumulator (20) stores hot water or a heated heat transfer medium for heating the hot water, and wherein the supplementary heat source (26) is provided for heating the hot water, wherein the hot water is led from the heat accumulator (20) through a first drain pipe (32), wherein the hot water is led from the supplementary heat source (26) through a second drain pipe (27) with a second valve (28), wherein the first drain pipe (32) and the second drain pipe (27) merge at an intersection (34) from which a hot water pipe (30) leads the hot water to the tapping point (31), **characterised in that** the heating system (1) comprises a heat exchanger (11), the main heat source (2) can either be connected to the heat accumulator (20) or to the first side of the heat exchanger (11) by means of a switch valve (7), and the supplementary heat source (26) is connected to the fresh water supply line (21) via the second side of the heat exchanger such that in operation the cold fresh water first flows through the heat exchanger (11) and then flows through the supplementary heat source (26).

2. Heating system (1) according to claim 1, **characterised in that** the first drain pipe (32) comprises a first valve (33) for choking or blocking and/or the second drain pipe (27) comprises a second valve (28) for choking or blocking.

3. Heating system (1) according to claim 1 or 2, **characterised in that** the heat accumulator (20) is a drinking water tank.

4. Heating system (1) according to claim 1 or 2, **characterised in that** the heat accumulator (20) is a storage with a heat transfer medium, and the heat accumulator (20) comprises a heat exchanger for transmitting the heat of the heat transfer medium to fresh water.

5. Heating system (1) according to any of the preceding claims, **characterised in that** the main heat source (2) is a heat pump.

6. Heating system (1) according to any of the preceding claims, **characterised in that** the supplementary heat source (26) is an in-line water heater.

7. Heating system (1) according to any of the preceding claims, **characterised in that** the heating system (1) comprises a control device (50) which is connected to one or more temperature sensors (80) for detecting heat provided by the heat accumulator (20), which is connected to suspending agents for operating the valves (28, 33) and, if applicable, to a suspending agent for the switch valve (7), and the control device (50) is configured such that in operation the valves (28, 33) and, if applicable, the switch valve (7) are operated in such a way that the temperature at the tapping point (31) corresponds to a stored temperature set value or a temperature set value entered by the user.

8. Method for operating a heating device according to any of claims 1 to 7, **characterised in that** the valves (28, 33) and, if applicable, the switch valve (7) are operated in such a way that during the drawing of hot water at the tapping point (31) firstly the hot water is provided by the heat accumulator (20) and, in the event that the temperature of the hot water provided by the heat accumulator (20) is below the stored temperature set value or the temperature set value entered by the user, the hot water is additionally or exclusively provided by the supplementary heat source (26).

9. Method according to claim 8, **characterised in that** the hot water is also additionally provided by the supplementary heat source (26) if the temperature of the hot water provided by the heat accumulator (20) is above or equal to the stored temperature set value or the temperature set value entered by the user, however, for a stratified storage the setpoint temperature is present only in the upper layer, for a conventional storage the temperature is only slightly above the setpoint temperature or for a phase change material the phase change material is mainly solidified and therefore the amount of energy contained in the storage does not suffice to provide a sufficient hot water volume with the setpoint temperature.

## Revendications

1. Système de chauffage (1) destiné à chauffer un bâtiment et à chauffer de l'eau chaude qui est mise à disposition au niveau d'un point de puisage (31),
comprenant une conduite d'amenée d'eau fraîche (21) destinée à amener de l'eau froide, une source de chaleur principale (2), un réservoir de chaleur (20) relié à la source de chaleur principale (2) et une source de chaleur supplémentaire (26),
dans lequel la source de chaleur principale (2) est prévue pour chauffer le bâtiment et/ou pour chauffer le réservoir de chaleur (20),
dans lequel le réservoir de chaleur (20) stocke de l'eau chaude ou un fluide caloporteur chauffé afin de chauffer de l'eau chaude
et dans lequel la source de chaleur supplémentaire (26) est prévue pour chauffer l'eau chaude,
dans lequel l'eau chaude en provenance du réservoir de chaleur (20) est guidée via une première conduite d'écoulement (32),
dans lequel l'eau chaude de la source de chaleur supplémentaire (26) est guidée via une deuxième conduite d'écoulement (27) avec une deuxième vanne (28),
dans lequel la première conduite d'écoulement (32) et la deuxième conduite d'écoulement (27) sont réunies en un noeud (34) à partir duquel une conduite d'eau chaude (30) guide l'eau chaude vers le point de puisage (31),
**caractérisé en ce que** le système de chauffage (1) comprend un échangeur de chaleur (11), **en ce que** la source de chaleur principale (2) peut être reliée avec une vanne de distribution (7) soit au réservoir de chaleur (20) soit au premier côté de l'échangeur de chaleur (11) et **en ce que** la source de chaleur supplémentaire (26) est reliée de telle sorte à la conduite d'amenée d'eau fraîche (21), par l'intermédiaire du deuxième côté de l'échangeur de chaleur, que l'eau fraîche froide, lors du fonctionnement, passe d'abord par l'échangeur de chaleur (11) et ensuite par la source de chaleur supplémentaire (26).

2. Système de chauffage (1) selon la revendication 1, **caractérisé en ce que** la première conduite d'écoulement (32) comprend une première vanne (33) pour réduire ou fermer la conduite et/ou **en ce que** la deuxième conduite d'écoulement (27) comprend une deuxième vanne (28) pour réduire ou fermer la conduite.

3. Système de chauffage (1) selon la revendication 1 ou 2, **caractérisé en ce que** le réservoir de chaleur (20) est un réservoir d'eau potable.

4. Système de chauffage (1) selon la revendication 1 ou 2, **caractérisé en ce que** le réservoir de chaleur (20) est un réservoir avec un fluide caloporteur et **en ce que** le réservoir de chaleur (20) comprend un échangeur de chaleur pour transmettre la chaleur du fluide caloporteur à l'eau fraîche.

5. Système de chauffage (1) selon l'une des revendications précédentes, **caractérisé en ce que** la source de chaleur principale (2) est une pompe à chaleur.

6. Système de chauffage (1) selon l'une des revendications précédentes, **caractérisé en ce que** la source de chaleur supplémentaire (26) est un chauffe-eau instantané.

7. Système de chauffage (1) selon l'une des revendications précédentes, **caractérisé en ce que** le système de chauffage (1) comprend un appareil de commande (50) qui est relié à un ou plusieurs capteurs de température (80) afin de détecter la chaleur fournie par le réservoir de chaleur (20) et qui est relié à des moyens de réglage destinés à actionner les vannes (28, 33) et le cas échéant à un moyen de réglage destiné à la vanne de distribution (7) et **en ce que** l'appareil de commande (50) est configuré de telle sorte que, lors du fonctionnement, les vannes (28, 33) et le cas échéant la vanne de distribution (7) sont actionnées de telle sorte que la température au point de puisage (31) correspond à une valeur de température de consigne mémorisée ou entrée par l'utilisateur.

8. Procédé de fonctionnement d'un appareil de chauffage selon l'une des revendications 1 à 7, **caractérisé en ce que**, lors du puisage d'eau chaude au niveau du point de puisage (31), les vannes (28, 33) et le cas échéant la vanne de distribution (7) sont actionnées de telle sorte que l'eau chaude est d'abord fournie par le réservoir de chaleur (20) et, si la température de l'eau chaude fournie par le réservoir de chaleur (20) est inférieure à la valeur de température de consigne mémorisée ou entrée par l'utilisateur, l'eau chaude est fournie en plus ou exclusivement par la source de chaleur supplémentaire (26).

9. Procédé selon la revendication 8, **caractérisé en ce que** l'eau chaude est aussi déjà fournie en plus par la source de chaleur supplémentaire (26) lorsque la température de l'eau chaude fournie par le réservoir de chaleur (20) est supérieure ou égale à la valeur de température de consigne mémorisée ou entrée par l'utilisateur mais, dans le cas d'un réservoir à couches, la température de consigne n'est encore présente que dans la couche la plus haute, dans le cas d'un réservoir conventionnel, la température est seulement juste au-dessus de la température de consigne ou, dans le cas d'un matériau à changement de phase, celui-ci est majoritairement gelé et la quantité d'énergie contenue dans le réservoir ne suffit donc pas à fournir un volume d'eau chaude suffisant avec la température de consigne.
